Europäisches Patentamt

European Patent Office

Office européen des brevets

(19)

(11) Numéro de publication : **0 337 910 B1**

# (12) FASCICULE DE BREVET EUROPEEN

(45) Date de publication du fascicule du brevet :
**16.06.93 Bulletin 93/24**

(51) Int. Cl.⁵ : **B01D 53/00,** B01D 53/34,
F23J 15/00

(21) Numéro de dépôt : **89470006.1**

(22) Date de dépôt : **03.04.89**

(54) **Procédé de réduction dans des fumées contenant des éléments condensables, de la teneur en éléments incondensables solubles dans les éléments condensables.**

(30) Priorité : **11.04.88 FR 8804919**

(43) Date de publication de la demande :
**18.10.89 Bulletin 89/42**

(45) Mention de la délivrance du brevet :
**16.06.93 Bulletin 93/24**

(84) Etats contractants désignés :
**BE CH DE FR GB IT LI**

(56) Documents cités :
**EP-A- 0 160 812
FR-A- 2 592 812**

(73) Titulaire : **SOCIETE DITE: SOGEA
3, Cours Ferdinand de Lesseps
F-92851 Rueil-Malmaison Cédex (FR)**

(72) Inventeur : **Marchand, Denis
52 Avenue du Général Leclerc
F-78230 Le Pecq (FR)**
Inventeur : **Patte, Philippe
45 Avenue de l'Armée Patton
F-54000 Nancy (FR)**

(74) Mandataire : **Puit, Thierry et al
Centre de Recherches de Pont-à-Mousson
Service de Propriété Industrielle Boîte Postale
109
F-54704 Pont-à-Mousson Cédex (FR)**

EP 0 337 910 B1

## Description

La présente invention est relative à un procédé et à un dispositif de réduction, dans des fumées contenant des éléments condensables, de la teneur en éléments gazeux non condensables solubles dans ces éléments condensables.

La présente invention a plus particulièrement pour objet un procédé et un dispositif de réduction de la teneur en HCl des fumées, contenant de la vapeur d'eau, provenant de l'incinération de déchets tels que des ordures ménagères.

En effet, la destruction par incinération des déchets qui contiennent du chlore, principalement sous forme de matières plastiques chlorées (surtout chorure de polyvinyle PVC), conduit à la présence dans les fumées de chlorure d'hydrogène gazeux HCl à des teneurs variables suivant la provenance des déchets. Par exemple pour les ordures ménagères, la teneur moyenne en HCl est voisine de 1 g/Nm3 dans les conditions standard d'évaluation (7 % CO2 ou 11 % O2) qui sont celles pour lesquelles on a défini les teneurs maxima de rejet.

On connaît ainsi par le brevet FR 2 592 812, un procédé et un dispositif de réduction de la teneur en polluants acides dans des fumées, les fumées étant dépoussièrées et subissant une phase de refroidissement avant d'être rejetées dans l'atmosphère. Dans ce procédé, les fumées sont refroidies à une température inférieure à leur point de rosée, ce qui entraîne la condensation de la vapeur d'eau.

Ainsi, les fumées qui sortent de ce dispositif échangeur de chaleur sont saturées en vapeur d'eau, les polluants nocifs encore présents étant en solution dans les gouttelettes d'eau.

Il est donc nécessaire de placer, en aval du dispositif échangeur de chaleur, un dévésiculeur qui capte les gouttelettes sortant de cet échangeur.

Or, les gouttelettes engendrées par un tel dispositif sont très petites puisqu'elles résultent de la condensation in situ, dans les fumées, de la vapeur d'eau, autour de noyaux de condensation. Ainsi, le dévésiculeur, qui peut être un venturi, est très gourmand en énergie et s'encrasse facilement. Par ailleurs, ce dévésiculeur génére une perte de charge de l'ordre de 300 daPa.

Pour s'affranchir de ce dévésiculeur, on a proposé différentes installations qui toutes supposent un réchauffage des fumées pour les rejeter ensuite à l'état non saturé.

Quoi qu'il en soit, l'installation de dévésiculage ou de réchauffage est une installation complexe, onéreuse et d'entretien difficile.

La présente invention a donc pour but de fournir un procédé de réduction de la teneur en polluants gazeux solubles dans l'eau contenus dans des fumées, procédé dans lequel les fumées, une fois la pollution réduite, sortent, sans aucun traitement ultérieur, à l'état non saturé en vapeur d'eau, et exemptes de vésicules de condensats.

Un autre but de la présente invention est de fournir un dispositif pour la mise en oeuvre du procédé ci-dessus.

Un autre but de la présente invention est encore de fournir un dispositif qui autorise des débits importants de fumées à traiter sans engendrer de pertes de charge dissuasives et assurant un rendement supérieur à 80 % en ce qui concerne l'abattement de la pollution gazeuse.

La présente invention a donc pour objet un procédé de réduction, dans des fumées contenant des éléments condensables, de la teneur en éléments gazeux non condensables solubles dans les éléments condensables dans lequel les fumées préalablement dépoussiérées subissent une phase de refroidissement au cours de laquelle condensent les éléments condensables, les éléments incondensables étant absorbés du sein des fumées dans les condensats, les fumées, à la fin de la phase de refroidissement, présentant une saturation en éléments condensables très inférieure à 100 %.

Un autre objet de la présente invention est un procédé de réduction de la teneur en HCl, dans des fumées issues de la combustion d'ordures ménagères et contenant de la vapeur d'eau et du HCl, dans lequel les fumées sont refroidies, la vapeur d'eau condensant, HCl étant absorbé du sein des fumées dans l'eau condensée, les fumées, à la fin du refroidissement, étant non saturées en vapeur d'eau.

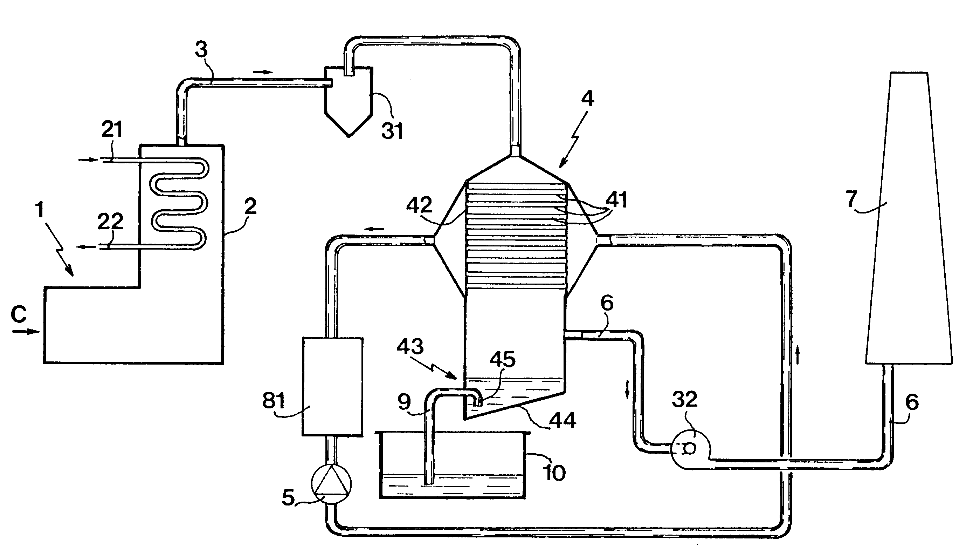

Les caractéristiques et avantages de l'invention apparaîtront au cours de la description qui va suivre faite en référence à la figure unique donnée uniquement à titre d'exemple non limitatif et qui représente un schéma d'ensemble d'un dispositif de traitement des fumées de combustion selon l'invention.

Suivant le procédé selon la présente invention, des fumées à traiter, comprenant une phase vapeur condensable et une phase gazeuse incondensable soluble dans l'eau, issues par exemple de l'incinération d'ordures ménagères, sont, après un dépoussièrage qui abaisse leur teneur en poussières en dessous de 50 mg/Nm3, refroidies à une température supérieure à leur température de rosée TR.

Ce refroidissement est réalisé par circulation des fumées à traiter à l'intérieur d'un échangeur de chaleur à paroi froide dont la température de paroi TS est inférieure à la température de rosée TR des fumées à traiter, les fumées étant introduites dans l'échangeur à une température d'entrée TFe de l'ordre de 250°C et avec une teneur en vapeur d'eau de l'ordre de 100 g par Kg de fumées sèches.

Ainsi, la température des fumées TF étant toujours supérieure à la température de rosée TR, la phase condensable ne condensera qu'au contact de la paroi froide.

En effet, si des fumées, constituées d'une phase vapeur condensable et d'une phase gazeuse incondensable, sont amenées à circuler à une température TF supérieure à la température de rosée TR dans un échangeur à parois froides dont la température TS est inférieure à la température de rosée TR, la phase condensable va voir sa pression Pv chuter brusquement au voisinage de la paroi froide pour atteindre une pression Pv∗ à la température de paroi TS, inférieure à la pression de vapeur saturante Pvs à la température de rosée TR.

Ainsi, un film de condensats va se former à la surface de la paroi froide.

Or, soit Pg la pression des gaz incondensables solubles dans l'eau, soit Pi la pression des gaz incondensables insolubles dans l'eau, la pression totale (Pg + Pv + Pi) est constante et égale à la pression atmosphérique.

Si Pv chute au voisinage de la paroi froide, (Pg + Pi) doit augmenter de la même valeur puisque (Pg + Pv + Pi) est constante, Pg et Pi augmentant dans les mêmes proportions.

Ainsi, va se créer, au-dessus du film de condensats qui se forme à la surface de la paroi froide, un film de gaz incondensables au sein duquel existe un fort gradient de pression.

De la sorte, par diffusion, les gaz incondensables solubles dans l'eau présents dans les fumées vont migrer dans ce film de gaz et être absorbés dans le film de condensats.

Le processus d'échange thermique capte la chaleur latente de condensation et la chaleur sensible dans le film de gaz incondensables mais récupère peu la chaleur sensible du sein des fumées.

Par ailleurs, la température de paroi TS étant largement inférieure à la température de rosée TR des fumées, le processus d'échange thermique est très efficace dans le cadre de la condensation mais peu performant dans les échanges de chaleur sensible.

La température des fumées baisse peu à peu par contact avec le film de gaz incondensables qui est en contact avec le film de condendats.

Les fumées continuant de circuler dans l'échangeur de chaleur à parois froides, leur température TF continuant de diminuer mais demeurant supérieure à leur température de rosée TR, la phase vapeur condensable va continuer à condenser uniquement à la surface de la paroi froide de l'échangeur dont la température TS est toujours inférieure d'au moins 20°C à la température de rosée TR des fumées qui sont à son contact.

La teneur en gaz incondensables solubles dans l'eau dissouts dans le film de condensats diminue au fur et à mesure du cheminement des fumées dans l'échangeur et la teneur en gaz incondensables au sein des fumées diminue parallèlement si bien que l'écart entre les pressions de gaz au sein des fumées et les pressions partielles au-dessus du film de condensats se maintient à un niveau tel que la condensation continue de fonctionner comme décrit précédemment et notamment jusqu'à la fin de l'échangeur.

Dans ces conditions, comme l'échangeur n'est pas infiniment long, les fumées sortent à une température TFs supérieure à la température de rosée TRs finale, l'humidité relative étant très inférieure à 100 %, la teneur en gaz incondensables solubles dans l'eau étant fortement réduite.

La phase liquide, qui a condensé à la surface de la paroi froide et dans laquelle les gaz incondensables ont été dissouts, est collectée par ruissellement et évacuée en dehors de l'échangeur.

A la sortie de l'échangeur de chaleur, les fumées qui sont rejetées hors de cet échangeur à une température de sortie TFs de l'ordre de 60°C étant non saturées en vapeur d'eau, il n'y a aucune gouttelette dans ces fumées, de la sorte, les gaz incondensables non éliminés ne sont pas en solution dans ces fumées évacuées.

Ainsi, le procédé selon l'invention ne nécessite pas la présence d'un dispositif pour supprimer les gouttelettes de condensats qui seraient rejetées à la sortie de l'échangeur de chaleur.

Il va maintenant être décrit un dispositif de mise en oeuvre du procédé selon l'invention.

Le dispositif de traitement des fumées représenté à la Figure unique est associé à un dispositif de combustion pourvu d'une chaudière de récupération de chaleur 2 alimentée en eau par une conduite 21 et produisant de la vapeur sortant par une conduite 22. Les fumées provenant de la combustion d'un combustible C quittent la chaudière 2 par une conduite 3 à une température relativement basse, par exemple 250°C à 300°C. Elles traversent ensuite un dispositif de dépoussièrage qui est ici représenté par un cyclône 31 mais qui pourrait être remplacé par un autre dispositif, par exemple un dépoussièreur électrostatique, qui abaisse leur teneur en poussière en-dessous de 50 mg/Nm3.

Les fumées dépoussiérées passent alors dans un dispositif d'échange thermique 4 qui est composé d'un échangeur fumées-fluide comprenant une pluralité de surfaces froides, par exemple des tubes 41 formant un faisceau, qui véhiculent un fluide de refroidissement fourni par une pompe 5 tandis que les fumées circulent à l'extérieur des surfaces d'échange 41 dans l'espace limité par des plaques d'extrémité 42 et une enveloppe extérieure au faisceau, non représentée. L'échangeur thermique peut être de type à contre-courant, à co-courant ou à courants croisés. Les fumées le traversent suivant un trajet vertical descendant. La vapeur d'eau qui condense selon le procédé suivant la présente invention, sur les surfaces froides de l'échangeur de chaleur thermique 4 en se chargeant en composés solubles incondensables, est collectée par un dispositif 43 situé à la base de l'échangeur, puis évacuée au-dehors par une conduite 9 jusqu'à un bac 10 où l'on procède à la neutralisation de la solution à l'aide de réactifs R.

En effet, la condensation sur les parois froides de l'échangeur génère de grosses gouttelettes qui tombent de parois froides en parois froides et qui, finalement, terminent leur chute, à la base de l'échangeur, dans le dispositif collecteur 43 constitué d'une paroi inclinée 44 formant réservoir dans lequel débouche un siphon 45 prolongé par la conduite 9. Ce dispositif à siphon évite que des fumées ne soient entraînées dans la conduite 9.

Les fumées refroidies, non saturées en vapeur d'eau, sortent de l'échangeur 4 par une conduite 6 située dans sa partie inférieure, au-dessus du dispositif collecteur 43, et sont aspirées par un ventilateur 32 qui les rejette à une cheminée 7, la conduite 6 et le ventilateur 32 constituant donc le dispositif de transfert des fumées traitées dans l'échangeur 4 vers la cheminée 7. Il est à noter qu'en variante le ventilateur 32 pourrait également être situé sur la conduite 3 en amont de l'échangeur 4. Ainsi, le dispositif de transfert des fumées de l'échangeur 4 vers la cheminée 7 ne comporte aucune installation de dévésiculage.

Les fumées circulant dans l'échangeur à une vitesse de l'ordre de 1,5 à 2 m/s et les grosses gouttelettes collectées par le dispositif 43 ayant une vitesse d'entraînement supérieure à 5 m/s, les fumées évacuées par la conduite 6 sont ainsi dépourvues de toutes gouttelettes à la différence du procédé et du dispositif antérieurs dans lesquels les gouttelettes générées étant de petites tailles et ayant donc des vitesses d'entraînement très faibles, ces gouttelettes étaient entraînées dans la conduite 6.

Le fluide de refroidissement des surfaces froides, constituées par les tubes 41, étant réchauffé dans l'échangeur de chaleur 4, circule en circuit fermé, et est dirigé à la sortie de cet échangeur 4 vers un circuit de refroidissement 81, constitué par une tour de refroidissement ou un échangeur à plaques, avant d'être réintroduit dans l'échangeur 4 par la pompe 5.

Selon un mode de réalisation préféré, l'échangeur thermique 4 est constitué de tubes en graphite qui, d'une part, résistent à la corrosion et qui, d'autre part, permettent de faire circuler le fluide de refroidissement sous forte pression.

EP 0 337 910 B1

TRAITEMENT DES FUMEES D'INCINERATION

D'ORDURES MENAGERES "Résultats d'Essais".

| Débit des fumées traitées Kg sec/h | Température des fumées (°C) | | Température de rosée (°C) | | HCL mg/Nm3 sec | | Rendement d'élimination d'HC1 (%) | Température de l'eau de refroidissement(°C) | | Débit de l'eau de refroidissement m3/h |
|---|---|---|---|---|---|---|---|---|---|---|
| | Entrée | Sortie | Entrée | Sortie | Entrée | Sortie | | Entrée | Sortie | |
| 5683 | 252 | 59 | 52 | 36.5 | 1245 | 180 | 85.5 | 20.1 | 28.3 | 58.2 |
| 5729 | 252 | 57 | 48.1 | 34.2 | 1017 | 214 | 79.0 | 18.8 | 26.5 | 58.2 |
| 8610 | 252 | 66 | 47.5 | 37.3 | 1334 | 199 | 85.3 | 23.9 | 31.9 | 68.4 |

Des essais ont ainsi été réalisés dans lesquels des fumées, provenant de l'incinération d'ordures ménagères, contenant plus de 1 g d'HCl par Nm3 ont été introduites dans le dispositif échangeur thermique 4 à un débit supérieur à 5500 kg sec / h à une température TFe de l'ordre de 250°C.

Le fluide de refroidissement utilisé a été de l'eau à une température inférieure à 40°C. Plus particulièrement, l'eau a été introduite à une température de l'ordre de 20°C et est ressortie de l'échangeur thermique 4 à une température de l'ordre de 28°C à un débit d'environ 60 m3/h.

Les fumées sont ressorties de l'échangeur thermique 4 à une température de l'ordre de 60°C, le rendement d'élimination d'HCl étant supérieur à 80 %, la teneur en vapeur d'eau étant de l'ordre de 40 g par Kg. Les fumées sont donc ressorties avec une humidité relative de l'ordre de 30 %.

Le tableau ci-joint illustre les différents essais qui ont été menés et met en évidence la totale fiabilité du procédé.

D'autres composés gazeux incondensables solubles dans l'eau, tels que SO2, NOx, HF, peuvent bien entendu être éliminés selon le même procédé par le même dispositif.

Par ailleurs, les produits condensables tels que les vapeurs métalliques ou certains composés organiques sont également éliminés par le procédé et le dispositif selon la présente invention.

Plus particulièrement, des essais ont montré que des fumées contenant 321 µg/Nm3 de mercure ne présentaient plus, après avoir été traitées selon le procédé suivant la présente invention, que 23 µg/Nm3 de mercure à la sortie de l'échangeur thermique 4, ce qui représente un rendement voisin de 95 %.

## Revendications

1. Procédé de réduction, dans des fumées contenant des éléments condensables, de la teneur en éléments gazeux non condensables solubles dans les éléments condensables dans lequel les fumées préalablement dépoussiérées subissent une phase de refroidissement au cours de laquelle condensent les éléments condensables, les éléments incondensables étant absorbés du sein des fumées dans les condensats, caractérisé en ce que les fumées, à la fin de la phase de refroidissement, présentent une saturation en éléments condensables très inférieure à 100 %.

2. Procédé selon la revendication 1 caractérisé en ce que des fumées issues de la combustion d'ordures ménagères, et contenant de la vapeur d'eau et du HCl, sont refroidies, la vapeur d'eau condensant et HCl étant absorbé du sein des fumées dans l'eau qui a condensé, les fumées, à la fin du refroidissement étant non saturées en vapeur d'eau.

3. Procédé selon l'une des revendications 1 ou 2 caractérisé en ce que, durant la phase de refroidissement, les fumées sont maintenues à une température TF supérieure à leur température de rosée TR.

4. Procédé selon l'une des revendications 1 ou 2 caractérisé en ce que la phase de refroidissement est réalisée par contact des fumées avec une paroi froide dont la température TS est inférieure à la température de rosée TR des fumées qui sont à son contact.

5. Procédé selon la revendication 4 caractérisé en ce que la paroi froide est à une température TS inférieure d'au moins 20°C à la température de rosée TR des fumées de contact.

6. Procédé selon la revendication 5 caractérisé en ce que la paroi froide est maintenue à la température TS par circulation d'eau.

7. Procédé selon la revendication 1 caractérisé en ce que l'eau de maintien en température de la paroi froide est à une température inférieure à 40°C.

## Patentansprüche

1. Verfahren zur Verringerung des Gehaltes an unkondensierbaren gasförmigen Bestandteilen, die in den in Rauchgasen vorhandenen kondensierbaren Bestandteilen löslich sind, in welchem die zuvor von Staub befreiten Rauchgase einem Abkühlungsvorgang unterzogen werden, in dessen Verlauf die kondensierbaren Besdandteile kondensieren und die unkondensierbaren Bestandteile aus den Rauchgasen in den Kondensaten absorbiert werden, **dadurch gekennzeichnet,** daß die Rauchgase nach der Abkühlung eine Sättigung an kondensierbaren Bestandteilen von weit unter 100 % aufweisen.

2. Verfahren nach Anspruch 1, **dadurch gekennzeichnet,** daß die aus der Verbrennung von Hausmüll herrührenden Rauchgase, die Wasserdampf und HCl enthalten, abgekühlt werden, der Wasserdampf kondensiert und HCl aus den Rauchgasen im kondensierten Wasser absorbiert wird und diese Rauchgase nach der Abkühlung an Wasserdampf ungesättigt sind.

3. Verfahren nach Anspruch 1 oder 2, **dadurch gekennzeichnet,** daß während des Abkühlungsvorgangs die Temperatur $t_G$ der Rauchgase oberhalb ihres Taupunkts $t_d$ gehalten wird.

4. Verfahren nach Anspruch 1 oder 2, **dadurch gekennzeichnet,** daß der Abkühlungsvorgang durch Berührung der Rauchgase mit einer Kühlfläche durchgeführt wird, deren Temperatur $t_W$ niedriger als der Taupunkt $t_d$ der Rauchgase ist, die sich mit ihr in Berührung befinden.

5. Verfahren nach Anspruch 4, **dadurch gekennzeichnet,** daß die Kühlfläche eine Temperatur $t_W$ aufweist, die wenigstens 20 °C unter dem Taupunkt $t_d$ der mit ihr in Berührung befindlichen Rauchgase liegt.

6. Verfahren nach Anspruch 5, **dadurch gekennzeichnet,** daß die Kühlfläche mittels Wasserdurchfluß auf der Temperatur $t_W$ gehalten wird.

7. Verfahren nach Anspruch 1, **dadurch gekennzeichnet,** daß das die Temperatur der Kühlwand sicherstellende Wasser eine niedrigere Temperatur als 40 °C aufweist.

## Claims

1. Process for reducing the content of noncondensable gaseous components which are soluble in the condensable components, in fumes containing condensable components, in which the fumes from which dust has first been extracted are subject to a cooling stage during which the condensable components condense, the noncondensable components being absorbed from the fumes into the condensates, characterised in that the fumes are very much less than 100% saturated with condensable components at the end of the cooling stage.

2. Process according to claim 1, characterised in that fumes produced by the combustion of domestic refuse and containing water vapour and HCl are cooled, the water vapour being condensed and HCl being absorbed from the fumes into the water which has condensed, the fumes being unsaturated in respect of water vapour at the end of the cooling.

3. Process according to either of claims 1 and 2, characterised in that, during the cooling stage, the fumes are maintained at a temperature Ft above their dew-point temperature DT.

4. Process according to either of claims 1 and 2, characterised in that the cooling stage is produced by contact between the fumes and a cold wall whose temperature St is lower than the dew-point temperature DT of the fumes which are in contact with it.

5. Process according to claim 4, characterised in that the cold wall is at a temperature St which is at least 20°C lower than the dew-point temperature Dt of the fumes in contact with it.

6. Process according to claim 5, characterised in that the cold wall is maintained at the temperature St by water circulation.

7. Process according to claim 1, characterised in that the water for maintaining the temperature of the cold wall is at a temperature below 40°C.